# EUROPÄISCHE PATENTANMELDUNG

(11) **EP 1 265 133 A1**
(43) Veröffentlichungstag der Anmeldung: **11.12.2002**
(21) Anmeldenummer: 01113906.0
(22) Anmeldetag: 07.06.2001
(51) Int. Cl.: G06F 9/445

(54) **Verfahren zum Laden von Software auf mehrere Prozessoren**

(71) Anmelder: SIEMENS AKTIENGESELLSCHAFT, 80333 München (DE)
(72) Erfinder: Wangerczyn, Franz-Peter, 85635 Hoehenk.-Siegertsbrunn (DE); Wimmer, Peter, 81476 Muenchen (DE)

(57) **Zusammenfassung**

Die Erfindung befasst sich mit einem Verfahren zum Laden von Software, die in Kapseln (1, 2, 3, 4, 5) vorliegt, durch ein Lader-System, mit einem Lader-Sender, der auf einem Main Processor Stand Alone (6) läuft, und mehreren Lader-Empfängern, auf mehrere zuladende Main Processor Dependent (7, 8, 9) unterschiedlicher Lade-Typen, wobei jedem Main Processor Dependent (7, 8, 9) ein Lader-Empfänger zugeordnet ist und für jeden Lade-Typ eine Page-Tabelle mit jeweils einer zugeordneten Area Descriptor Table (10, 11, 12) besteht, in welcher die dem Lade-Typ zugeordneten Kapseln (1, 2, 3, 4, 5) angegeben sind. Erfindungsgemäß sind folgende Schritte vorgesehen: Erteilen eines Ladeauftrags mit einer Liste der zuladenden Main Processor Dependent (7, 8, 9) und der zugehörigen Lade-Typen an den Lader-Sender;
Aufbauen von Punkt-zu-Punkt-Verbindungen (13, 14, 15) zwischen dem Lader-Sender und jedem einzelnen zuladenden Main Processor Dependent (7, 8, 9);
Übermitteln der Area Descriptor Table (10, 11, 12) vom Lader-Sender an die einzelnen Lader-Empfänger;
Aufbauen eines Rings (16) zu allen zuladenden Main Processor Dependent (7, 8, 9) durch den Lader-Sender;
Anbieten der Kapseln (1, 2, 3, 4, 5) auf dem Ring (16); Entscheiden der Lader-Empfänger anhand der Area Descriptor Table (10, 11, 12), ob eine Kapsel (1, 2, 3, 4, 5) auf den zuladenden Main Processor Dependent (7, 8, 9) geladen werden muss;
Laden der Kapsel (1, 2, 3, 4, 5) nach einer Adresskonvertierung von virtuell nach physikalisch bzw. Ignorieren der angebotenen Kapsel (1, 2, 3, 4, 5).

## Beschreibung

Die Erfindung befasst sich mit einem Verfahren zum Laden von Software auf mehrere zuladende Prozessoren unterschiedlicher Lade-Typen.

In einem Multiprozessor- oder einem verteilten System mit einer Vielzahl von Prozessoren mit unterschiedlicher Softwareausstattung ist es bekannt, dass die einzelnen Prozessoren mittels eines ATM-Busses miteinander verbunden sind. Die Prozessoren unterschiedlicher Lade-Typen weisen zum Teil nur minimal unterschiedliche Software-Ausstattungen auf. Die Software für die einzelnen Prozessoren mit unterschiedlichen Lade-Typen wird jede einzeln für sich produziert und auf der Systemplatte gespeichert. Dabei sind jedoch bis zu 90 % der Software identisch. Dies führt dazu, dass ein beträchtlicher Teil der Kapäzität der Systemplatte vergeudet wird. Im Recovery-Fall können nur Prozessoren mit identischer Software, das heißt identischen Lade-Typs, gemeinsam geladen werden. Dies, obwohl ein Großteil der Software für alle Prozessoren den gleichen Inhalt aufweist. Dadurch ergibt sich logischerweise auch ein erheblicher Einfluss auf die Recovery-Laufzeiten des Systems. Diese sind enorm hoch.

Die genannten Probleme multiplizieren sich mit der Anzahl von Prozessoren unterschiedlichen Lade-Typs. Ab einer gewissen Anzahl n von Prozessoren unterschiedlichen Lade-Typs erschöpft sich die Kapazität der Systemplatte, da n mal die gleiche Software gespeichert werden muss. Außerdem ist im Recovery-Fall eine nicht tolerierbare Ladezeit nötig, um die gesamte Software auf alle Prozessoren zu laden.

Aufgabe der Erfindung ist es deshalb, ein Verfahren anzugeben, mit dem die Ladezeiten reduziert werden und die Kapazität der Systemplatte möglichst wenig reduziert wird.

Diese Aufgabe wird durch ein Verfahren mit den Merkmalen des Anspruchs 1 gelöst. Die Software liegt erfindungsgemäß in Kapseln vor und nicht als Monolith auf der Systemplatte. Dadurch wird die Kapazität der Systemplatte gegenüber dem bekannten Verfahren weit weniger reduziert. Erfindungsgemäß sind in jeweils einer, den Page-Tabellen zugeordneten Tabelle, der Area Descriptor Table (ADT), die dem jeweiligen Lade-Typ eines Prozessors zugeordneten Kapseln angegeben. Die Page-Tabellen werden über eine Punkt-zu-Punkt-Verbindung jedem einzelnen zuladenden Prozessor übermittelt. Somit weiß jeder Prozessor, welche Kapseln er laden muss. Alle auf der Systemplatte vorhandenen Kapseln werden auf einem Ring, der zu allen zuladenden Prozessoren aufgebaut wurde, angeboten. In jedem einzelnen Prozessor wird an Hand der Page-Tabelle entschieden, ob eine bestimmte Kapsel auf ihn geladen werden muss. Falls die angebotene Kapsel nicht in seiner ADT aufgeführt ist, ignoriert er die angebotene Kapsel. Dagegen lädt er diese Kapsel, falls sie in der ADT angegeben ist, nach einer Adresskonvertierung von virtuell nach physikalisch. Durch dieses Verfahren ist eine enorme Zeitersparnis beim Laden der Software auf die Prozessoren gegeben, da eine Kapsel, die auf viele Prozessoren geladen werden muss, vom Ring von jedem Prozessor geladen werden kann.

Vorteilhaft ist es, wenn das Anbieten der Kapseln auf dem Ring sukzessiv erfolgt. Dabei ist es besonders vorteilhaft, wenn jede Kapsel nur ein einziges Mal angeboten wird. Dadurch wird die benötigte Zeit zum Laden der gesamten Software auf sämtliche Prozessoren minimiert.

Vorteilhaft ist es, wenn jede Kapsel nur ein einziges Mal auf der Systemplatte vorhanden ist und die Systemplatte die Vereinigungsmenge der Kapseln aller Lade-Typen enthält. Dadurch wird die Kapazität der Systemplatte minimal reduziert.

Weiterhin ist es vorteilhaft, wenn die gleiche Kapsel in unterschiedlichen Lade-Typen auf unterschiedlichen physikalischen Adressen in den zuladenden Prozessoren liegen kann. Dadurch sind die einzelnen Prozessoren unabhängig voneinander ausbildbar.

Weiterhin ist es vorteilhaft, wenn alle zuladenden Prozessoren die gleiche Kapsel zum gleichen Zeitpunkt laden. Dadurch ist ein möglichst schnelles Laden der gesamten Software möglich, da es keine zeitliche Verzögerung beim Laden einer Kapsel auf mehreren Prozessoren gibt.

Weitere vorteilhafte Weiterbildungen der Erfindung sind Gegenstand der Unteransprüche.

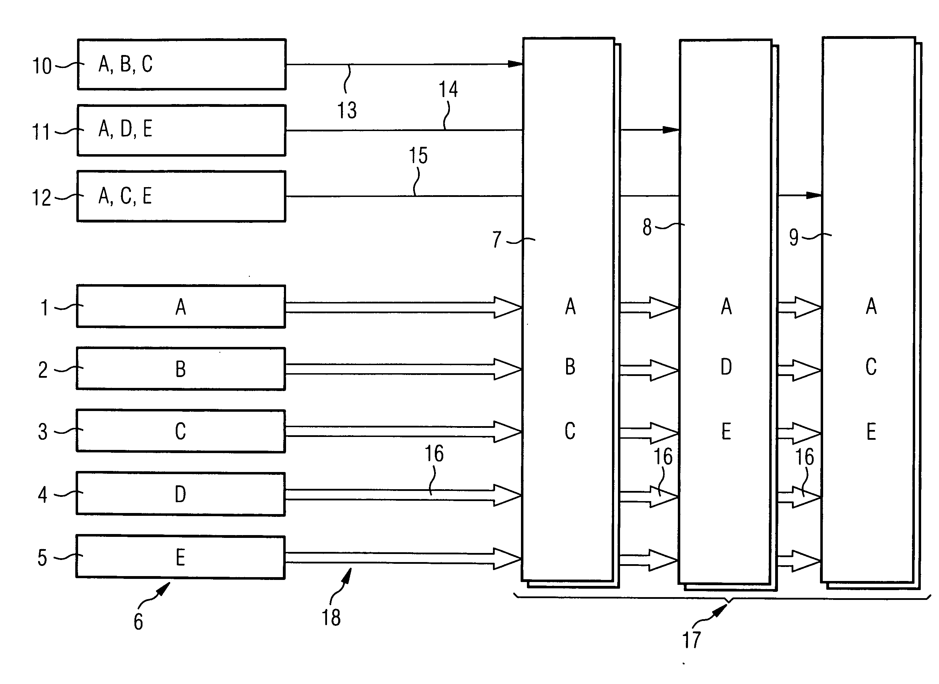

Weitere Vorteile und Einzelheiten der Erfindung sind Gegenstand eines im Folgenden an Hand der Figur beschriebenen Ausführungsbeispiels. Die einzige Figur zeigt ein Blockschaltbild eines erfindungsgemäßen Verfahrens.

In der Figur ist ein Main Processor Stand Alone (MP-SA) 6 gezeigt, auf der ein Backup Memory abgelegt ist. Im Backup Memory sind Page-Tabellen mit zugehörigen Area Descriptor Tables (ADT) 10, 11, 12 sowie Kapseln 1, 2, 3, 4, 5 abgelegt. Über einen ATM-Bus 18 ist der MP-SA 6 mit einem Prozessorspeicher 17, der aus drei Main Processor Dependent (MP-Dep) 7, 8, 9 besteht, verbunden. Die drei Prozessoren 7, 8, 9 sind von unterschiedlichem Lade-Typ. Das heißt, dass sie unterschiedliche Software vom Backup Memory laden müssen, beispielsweise bei einem Recovery. Die drei MP-Dep 7, 8, 9 benötigen alle die Software A der ersten Kapsel 1. Der Rest der benötigten Software B, C, D, E ist jedoch unterschiedlich. So benötigt der erste MP-Dep 7 neben der Software A der ersten Kapsel 1 die weitere Software B und C der zweiten Kapsel 2 sowie der dritten Kapsel 3. Dagegen benötigt der zweite MP-Dep 8 neben der Software A der ersten Kapsel 1 die weitere Software D und E der vierten Kapsel 4 sowie der fünften Kapsel 5. Schließlich benötigt der dritte MP-Dep 9 neben der Software A der ersten Kapsel 1 die weitere Software C und E der dritten Kapsel 3 sowie der fünften Kapsel 5. Der übereinstimmende Teil der Software A nimmt hierbei einen Anteil von 80 % ein. Dieser kann in Extremfällen sogar bis zu 90 % betragen. Die Software A-E im Backup Memory ist die Vereinigungsmenge aller Kapseln 1-5, die von sämtlichen MP-Dep 7-9 benötigt werden.

Die Softwareproduktion geht folgendermaßen vor sich:

In einem ersten Produktionsschritt, dem Linker, werden sämtliche Kapseln 1-5 eigenständig im virtuellen Adressraum gebunden. Dies bedeutet, dass jede einzelne der Kapseln 1-5 in jedem Lade-Typ der MP-Dep 7-9 die gleiche virtuelle Adresse belegt. In diesem Produktionsschritt erfolgt jedoch noch keine physikalische Speicher-Allocierung.

In einem zweiten Produktionsschritt, dem Builder, werden die Lade-Typen erstellt. Dies bedeutet, dass festgelegt wird, welche der Kapseln 1-5 in welchem der Lade-Typen der einzelnen MP-Dep 7-9 enthalten sind. Hierbei entstehen ladetyp-spezifische Page-Tabellen mit zugeordneten ADT 10-12. Des Weiteren erfolgt auch die physikalische Speicher-Allocierung. Dies bedeutet, dass die gleiche Kapsel 1-5 in unterschiedlichen Lade-Typen der MP-Dep 7-9 an unterschiedlichen physikalischen Adressen zum liegen kommen kann.

Zusätzlich entsteht in diesem Produktionsschritt für jeden Lade-Typ der einzelnen MP-Dep 7-9 ein Inhaltsverzeichnis, welches Auskunft darüber gibt, welche der Kapseln 1-5 einem bestimmten Lade-Typ zugeordnet sind. Dieses Inhaltsverzeichnis wird üblicherweise mit dem englischen Ausdruck "Table of Contents" (TOC) bezeichnet. Die Mehrzahl der Kapseln 1-5, nämlich die erste Kapsel 1, die dritte Kapsel 3 und die fünfte Kapsel 5 sind in mehreren Lade-Typen der MP-Dep 7-9 enthalten. Dabei ist die erste Kapsel 1, die Supervisor-Kapsel (Operating System), allen Lade-Typen zugehörig.

Die Page-Tabellen, TOCs und Kapseln 1-5 werden in die Ladebibliothek des Backup Memory als eigenständige Lademodule eingebracht. TOCs und Page-Tabellen sind durch Namenskonvention miteinander verknüpft.

Ein erfindungsgemäßes Verfahren zum Laden der Software geht folgendermaßen vor sich:

Es existiert ein Lader-System, das aus einem Lader-Sender, der auf dem MP-SA 6 abläuft, und Lader-Empfängern, welche auf den zuladenden MP-Dep 7-9 ablaufen, besteht. Der Lader-Sender bekommt von einer Maintainance den Ladeauftrag mit einer Liste der MP-Dep 7-9, wobei für jeden MP-Dep 7-9 ein eigener Eintrag existiert, und den dazugehörigen Lade-Typen.

Als erstes baut der Lader-Sender zu jedem MP-Dep 7-9 eine Punkt-zu-Punkt-Verbindung 13-15 auf und schickt dem jeweiligen Lader-Empfänger die für den jeweiligen MP-Dep 7-9 benötigte Page-Tabelle mit zugeordneten ADT 10-12. Diese Page-Tabellen sind abhängig vom Lade-Typ der einzelnen MP-Dep 7-9. Die erste ADT 10 enthält die erste Kapsel 1, zweite Kapsel 2 und die dritte Kapsel 3 mit der Software A, B, C für den ersten MP-Dep 7. Die zweite ADT 11 enthält die erste Kapsel 1, vierte Kapsel 4 und die fünfte Kapsel 5 mit der Software A, D, E für den zweiten MP-Dep 8. Die dritte ADT 12 enthält die erste Kapsel 1, dritte Kapsel 3 und fünfte Kapsel 5 mit der Software A, C, E des dritten MP-Dep 9. Somit ist in jeder Page-Tabelle eine Liste, die ADT 10-12, vorhanden, in der alle dem jeweiligen Lade-Typ zugehörigen Kapseln 1-5 enthalten sind. Damit ist jeder Lader-Empfänger in der Lage, eine Entscheidung darüber zu treffen, welche der Kapseln 1-5 auf seinen MP-Dep 7-9 geladen werden müssen.

Als nächstes baut der Lader-Sender eine Ringverbindung 16, den Broadcast, zu allen MP-Dep 7-9 auf. Dies bedeutet, dass jeder der MP-Dep 7-9 alle verschickten Nachrichten empfängt. Der Lader-Sender bietet sukzessive die Codes der einzelnen Softwares A-E der einzelnen Kapseln 1-5 auf dem Ring 16 an. Die einzelnen Lader-Empfänger entscheiden, ob die gerade angebotene Kapsel 1-5 auf den jeweiligen MP-Dep 7-9 zu laden ist. Falls die Entscheidung positiv ausfällt, führen die einzelnen Lader-Empfänger an Hand der jeweiligen ADT 10-12 der Page-Tabelle eine Adresskonvertierung von virtuell nach physikalisch durch und laden die jeweilige Kapsel 1-5 auf dem MP-Dep 7-9. Fällt die Entscheidung dagegen negativ aus, so ignorieren die Lader-Empfänger die zu dieser Kapsel 1-5 gehörigen Nachrichten, und diese Kapsel 1-5 wird nicht auf den MP-Dep 7-9 geladen.

Durch dieses erfindungsgemäße Verfahren wird jede einzelne Kapsel 1-5 nur ein einziges Mal auf den Ring 16 geladen und ist auch nur ein einziges Mal auf der Systemplatte vorhanden. Dadurch wird bei jedem Ladevorgang, beispielsweise beim Recovery, eine enorme Einsparung an Ladezeit erreicht, und die Recovery-Laufzeiten reduzieren sich auf einen Bruchteil. Des Weiteren wird auch die Kapazität der Systemplatte kaum verringert, da nicht die gesamte Software für jeden der einzelnen MP-Dep 7-9 unterschiedlichen Lade-Typs jeweils als Monolith auf der Systemplatte abgelegt ist, sondern die Software nur ein einziges Mal, die allen oder mehreren MP-Dep 7-9 gleich ist, sowie jeweils die Software, die unterschiedlich ist von den anderen MP-Dep 7-9.

Das vorbeschriebene Anwendungsbeispiel weist nur drei MP-Dep 7-9 unterschiedlichen Lade-Typs auf. Es versteht sich jedoch von selbst, dass eine beliebige Anzahl von MP-Dep unterschiedlichen Lade-Typs mittels des erfindungsgemäßen Verfahrens Software zuladen können. Ebenfalls ist eine Aufteilung der gesamten Software A-E in fünf Kapseln 1-5 nur exemplarisch. Die Aufteilung hängt immer von den einzelnen Lade-Typen der zuladenden MP-Dep ab. Dadurch sind sowohl eine geringere Anzahl als auch eine höhere Anzahl von Kapseln durch das erfindungsgemäße Verfahren eingeschlossen.

## Patentansprüche

1. Verfahren zum Laden von Software, die in Kapseln (1, 2, 3, 4, 5) vorliegt, durch ein Lader-System, mit einem Lader-Sender, der auf einem Main Processor Stand Alone (6) läuft, und mehreren Lader-Empfängern, auf mehrere zuladende Main Processor Dependent (7, 8, 9) unterschiedlicher Lade-Typen, wobei jedem Main Processor Dependent (7, 8, 9) ein Lader-Empfänger zugeordnet ist und für jeden Lade-Typ eine Page-Tabelle mit jeweils einer zugeordneten Area Descriptor Table (10, 11, 12) besteht, in welcher die dem Lade-Typ zugeordneten Kapseln (1, 2, 3, 4, 5) angegeben sind, mit folgenden Schritten:
Erteilen eines Ladeauftrags mit einer Liste der zuladenden Main Processor Dependent (7, 8, 9) und der zugehörigen Lade-Typen an den Lader-Sender;
Aufbauen von Punkt-zu-Punkt-Verbindungen (13, 14, 15) zwischen dem Lader-Sender und jedem einzelnen zuladenden Main Processor Dependent (7, 8, 9);
Übermitteln der Area Descriptor Table (10, 11, 12) vom Lader-Sender an die einzelnen Lader-Empfänger;
Aufbauen eines Rings (16) zu allen zuladenden Main Processor Dependent (7, 8, 9) durch den Lader-Sender; Anbieten der Kapseln (1, 2, 3, 4, 5) auf dem Ring (16);
Entscheiden der Lader-Empfänger anhand der Area Descriptor Table (10, 11, 12), ob eine Kapsel (1, 2, 3, 4, 5) auf den zuladenden Main Processor Dependent (7, 8, 9) geladen werden muss;
Laden der Kapsel (1, 2, 3, 4, 5) nach einer Adresskonvertierung von virtuell nach physikalisch bzw. Ignorieren der angebotenen Kapsel (1, 2, 3, 4, 5).

2. Verfahren nach Anspruch 1, **dadurch gekennzeichnet, dass** das Anbieten der Kapseln (1, 2, 3, 4, 5) auf dem Ring (16) sukzessiv erfolgt.

3. Verfahren nach einem der vorstehenden Ansprüche, **dadurch gekennzeichnet, dass** jede Kapsel (1, 2, 3, 4, 5) nur ein einziges Mal angeboten wird.

4. Verfahren nach einem der vorstehenden Ansprüche, **dadurch gekennzeichnet, dass** jede Kapsel (1, 2, 3, 4, 5) nur ein einziges Mal auf der Systemplatte (6) vorhanden ist und die Systemplatte (6) die Vereinigungsmenge der Kapseln (1, 2, 3, 4, 5) aller Lade-Typen enthält.

5. Verfahren nach einem der vorstehenden Ansprüche, **dadurch gekennzeichnet, dass** die gleiche Kapsel (1, 2, 3, 4, 5) in unterschiedlichen Lade-Typen auf unterschiedlichen physikalischen Adressen in den zuladenden Main Processor Dependent (7, 8, 9) liegen kann.

6. Verfahren nach einem der vorstehenden Ansprüche, **dadurch gekennzeichnet, dass** alle zuladenden Main Processor Dependent (7, 8, 9) die gleiche Kapsel (1, 2, 3, 4, 5) zum gleichen Zeitpunkt laden.
